# FASCICULE DE BREVET EUROPEEN

(11) **EP 4 114 723 B1**
(45) Date de publication et mention de la délivrance du brevet: **22.11.2023**
(21) Numéro de dépôt: 21714336.1
(22) Date de dépôt: 05.03.2021
(51) Int. Cl.: B64C 11/30, B64D 31/06, F01D 7/00, F01D 1/26, F01D 1/30

(54) **ASSERVISSEMENT DU CALAGE DE PALES**
REGELUNG FÜR BLATTVERSTELLUNG
BLADE PITCH CONTROL

(30) Priorité: 05.03.2020 FR 2002249
(43) Date de publication de la demande: 11.01.2023
(73) Titulaire: SAFRAN AIRCRAFT ENGINES, 75015 Paris (FR)
(72) Inventeur: DENEUVE, Sébastien, Jean, Fernand, 77550 MOISSY-CRAMAYEL (FR); YING, Charles, 77550 MOISSY-CRAMAYEL (FR)
(74) Mandataire: Regimbeau
(86) Numéro de dépôt international: PCT/FR2021/050378
(87) Numéro de publication internationale: WO 2021/176187

(56) Documents cités:
- EP-A1- 3 219 608
- EP-A1- 3 543 112
- WO-A1-2014/083259

## Description

### Domaine de l'invention

L'invention concerne le domaine technique général des turbomachines, plus particulièrement les turbomachines à hélice ou soufflante à calage variable, par exemple des turbomachines à double hélices contrarotatives non carénées (classiquement appelées *open rotor*), ou encore des turboréacteurs à soufflante carénée de type VPF (pour *variable pitch fan* en anglais) dont les aubes sont à calage variable et sont éventuellement prévues pour pouvoir fonctionner en mode d'inversion de poussée (inversion du sens de passage de l'air dans la soufflante).

### Etat de la technique

Les turbomachines sont classiquement équipées de systèmes de régulation de puissance aptes à commander la variation de différents paramètres, par exemple le débit de carburant ou le calage de l'angle des aubes d'une soufflante ou des pales d'une hélice, de manière à adapter la puissance de la turbomachine en fonction de la phase de vol. Dans ce qui suit, on prendra généralement l'exemple d'une hélice comme étant l'élément propulseur asservi, mais il est entendu que l'asservissement peut s'appliquer à tout élément propulseur constitué par une soufflante ou une hélice. En outre, on suppose que les aubes ou pales d'un élément propulseur sont conçues pour présenter toutes un même angle de calage.

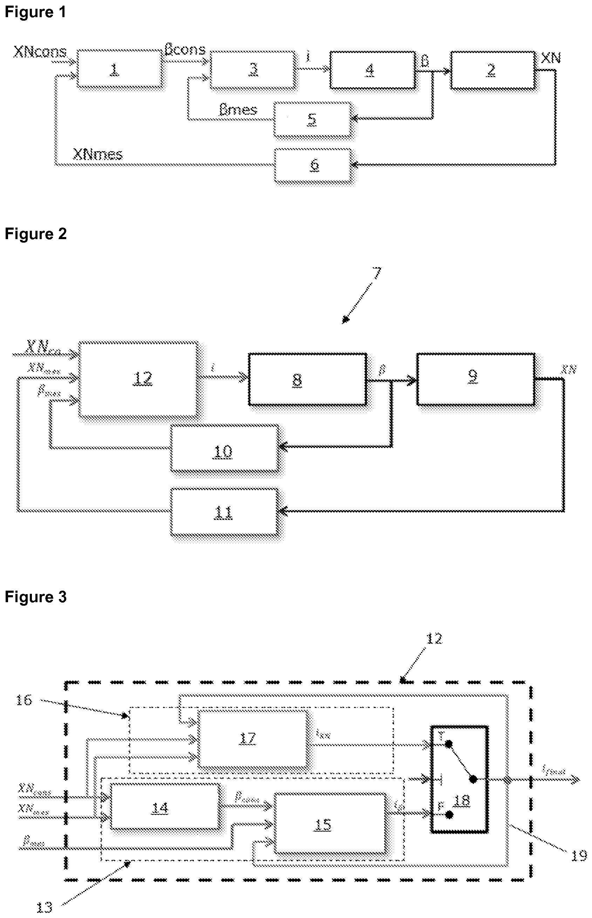

Une stratégie classique d'asservissement du régime d'une hélice, telle que représentée en figure 2, consiste à utiliser une régulation en cascade qui imbrique plusieurs régulateurs :
- un régulateur haut niveau 1 qui asservit le régime de l'hélice XN en commandant un calage β à partir d'une mesure de régime XNmes du moteur 2 entraînant l'hélice,
- un régulateur local 3 qui asservit l'angle de calage β en commandant un dispositif de modification de calage 4 à partir d'un retour de position βmes du dispositif de modification de calage 4.

Dans un tel système, le dispositif de modification de calage 4 agit sur le calage β des aubes ou pales de l'élément propulseur (soufflante ou hélice) de manière à faire varier le régime XN de cet élément propulseur.

Un dispositif de mesure de calage 5 réalise une mesure de calage βmes en sortie du dispositif de modification de calage 4, la mesure de calage βmes étant retournée au régulateur local 3.

Cette mesure de l'angle de calage peut être effectuée de manière directe, en mesurant directement l'angle, ou indirecte en mesurant un autre paramètre qui est une « image » de l'angle de calage. Par exemple la position d'un vérin qui via une chaine cinématique va se traduire en angle de calage.

Un dispositif de mesure de régime 6 réalise une mesure du régime XNmes en sortie du moteur 2, la mesure de régime XNmes étant retournée au régulateur haut-niveau 1.

La mesure de régime XNmes et une consigne de régime XNcons sont injectées dans le régulateur haut-niveau 1, qui en sortie émet une consigne de calage βcons.

La consigne de calage βcons et la mesure de calage βmes sont injectées dans le régulateur local 3, qui émet en sortie une commande i qui est injectée dans le dispositif de modification de calage 4.

Le problème de cette stratégie est qu'en cas de panne du dispositif de mesure de calage 5, la boucle du régulateur local 3 ne peut plus fonctionner ce qui rend la boucle du régulateur de haut niveau 1 inopérante.

Classiquement, une mise en sécurité du moteur, typiquement par un retour au ralenti du régime moteur avec une mise en drapeau des aubes ou pales de l'élément propulseur, est commandée en boucle ouverte en cas de perte de la chaine de mesure de calage. Ce retour en boucle ouverte est dangereux car on perd le lien entre le générateur de gaz et la partie propulsive du moteur :
- si le calage est diminué trop rapidement (diminution du régime des hélices) alors que la puissance du moteur est encore élevée, il y a un fort risque de surcouple ;
- si l'hélice n'est pas mise rapidement en position de sécurité lorsque sa position n'est pas mesurée, il y a un risque que celle-ci parte en zone de décrochage aérodynamique (excitations des modes oscillants) voire d'inversion intempestive (évènement classé catastrophique).

De plus, dans tous les cas cette accommodation se traduit par une perte de poussée, et une perte du contrôle de poussée. Le document WO 2014/083259 A1 divulgue un procédé de régulation d'un angle de calage des pales d'un élément propulseur d'une turbomachine, et un dispositif de régulation du calage d'une hélice d'une turbomachine.

### Exposé de l'invention

Un but de l'invention est d'assurer le contrôle commande du calage d'une hélice à calage variable malgré la perte de la chaîne de mesure du calage.

L'invention propose un procédé de régulation d'un angle de calage des aubes ou pales d'un élément propulseur d'une turbomachine, comprenant la génération d'une commande de calage en fonction d'une vitesse de rotation de l'hélice et d'une consigne de régime, le procédé comprend une chaîne de régulation nominale dans laquelle la commande de calage est générée en fonction également d'une valeur d'un angle de calage des aubes ou pales de l'élément propulseur, et
une chaîne de régulation dégradée dans lequel la commande de calage est générée indépendamment d'une valeur d'un angle de calage des aubes ou pales de l'élément propulseur.

Cela permet de continuer à réguler les régimes hélices malgré l'ajout de certaines limitations liées à la suppression de la boucle locale, par exemple lors d'une panne qui rend inopérante la chaîne de régulation nominale, ce qui permet s'affranchir d'une panne en opérant le moteur de manière différente. Ainsi, il est envisageable de continuer à opérer le moteur normalement pendant les régimes stabilisés et à juste modifier le mode de commande pendant les régimes transitoires, ce qui permet de continuer d'opérer le moteur.

Avantageusement, l'invention est complétée par les caractéristiques suivantes, prises seules ou en combinaison :
- le procédé comprend en outre une étape de sélection de la chaîne de régulation dégradée ou de la chaîne de régulation nominale ;
- le procédé comprend en outre une étape de retour de commande configurée pour retourner la commande de calage à au moins une parmi la chaîne de régulation nominale et la chaine de régulation dégradée ; cela permet d'assurer une continuité de la commande d'angle de calage lors de la commutation entre les chaînes de régulation nominale et dégradée ;
- la chaîne de régulation nominale comprend un premier régulateur configuré pour fournir une consigne de calage en fonction de la consigne de régime et la mesure de régime, et un deuxième régulateur configuré pour fournir la commande dégradée en fonction de la consigne de calage et la mesure de calage ;
- la chaîne de retour de commande est configurée pour retourner la commande de calage à au moins un parmi le deuxième régulateur et la chaine de régulation dégradée, et le deuxième régulateur est configuré pour fournir la commande dégradée en fonction de la consigne de calage, la mesure de calage et la commande de calage ;
- la consigne de régime est fonction d'une puissance délivrée par la turbomachine et est variable entre une limite inférieure et une limite supérieure, la limite inférieure étant configurée pour éviter un surcouple au niveau de l'hélice, la limite supérieure étant configurée pour éviter un décrochage aérodynamique de l'hélice ;
- la consigne de régime présente un gradient limité ; cela permet de limiter les variations de consigne et ainsi de lisser la courbe de commande, augmentant la sûreté du mode de pilotage.

Selon un autre aspect, l'invention propose un dispositif de régulation du calage d'une hélice d'une turbomachine comprenant un actionneur configuré pour modifier un angle de calage de l'hélice, le dispositif de régulation comprenant :
- un régulateur,
- un premier capteur configuré pour déterminer une valeur d'un angle de calage de l'hélice,
- un deuxième capteur configuré pour déterminer une vitesse de rotation de l'hélice,

le régulateur étant configuré pour :
   - dans un mode de régulation nominal, fournir une commande de calage nominale à l'actionneur en fonction d'une consigne de régime, de la valeur de l'angle de calage et de la vitesse de rotation de l'hélice ;
   - dans un mode de régulation dégradé, fournir une commande de calage dégradée à l'actionneur en fonction de la consigne de régime et de la vitesse de rotation de l'hélice, indépendamment de la valeur de l'angle de calage ;
le dispositif de régulation comprenant en outre un sélecteur configuré pour sélectionner le mode de régulation nominale ou le mode de régulation dégradé du régulateur.

Selon un autre aspect, l'invention propose une turbomachine comprenant une hélice à calage variable et un dispositif de régulation de calage selon l'invention, dans lequel le régulateur met en oeuvre un procédé de régulation de calage selon l'invention.

Selon un autre aspect, l'invention propose un aéronef comprenant une turbomachine selon l'invention.

### Description des figures

D'autres caractéristiques et avantages de l'invention ressortiront encore de la description qui suit, laquelle est purement illustrative et non limitative, et doit être lue en regard des figures annexées sur lesquelles :
La figure 1 est une modélisation schématique d'une architecture d'un système de régulation du calage des aubes d'une hélice de l'art antérieur ;
La figure 2 est une modélisation schématique d'une architecture d'un système de régulation du calage des aubes d'une hélice selon l'invention ;
La figure 3 est une modélisation schématique de la structure fonctionnelle d'un macro-régulateur d'un système de régulation du calage des aubes d'une hélice selon l'invention ;
La figure 4 est une modélisation schématique d'une turbomachine à hélice à calage variable, telle qu'une turbomachine à double soufflante non carénée appelée communément « open rotor ».

### Description détaillée de l'invention

En référence à la figure 2, un mode de réalisation d'un système de régulation de régime 7 comporte :
- un actionneur 8 de modification de calage configuré pour modifier le calage d'une hélice en fonction d'une consigne de modification du calage de l'hélice ;
- une turbomachine 9 configurée pour entraîner l'hélice en rotation ;
- un premier capteur 10 configuré pour mesurer l'angle de calage d'une hélice ;
- un deuxième capteur 11 configuré pour mesurer la vitesse de rotation de l'hélice ;
- un régulateur 12 configuré pour émettre une commande i de changement d'un calage d'une hélice en fonction d'une consigne de régime XNcons, une valeur d'angle de calage βmes mesurée par le premier capteur 10 et une mesure de vitesse de rotation XNmes émise par le deuxième capteur 11.

Le régulateur 12, en référence à la figure 3, comporte :
- une chaîne de régulation nominale 13 comportant une première étape de régulation 14 configurée pour générer une consigne de modification de calage βcons en fonction de la consigne de régime XNcons et la mesure de régime XNmes, et une deuxième étape de régulation 15 configurée pour générer une consigne nominale iβ en fonction de la mesure de calage βmes et de la consigne de modification de calage βcons;
- une chaîne de régulation dégradée 16 comportant une troisième étape de régulation 17 configurée pour générer une consigne dégradée iXN en fonction de la consigne de régime XNcons et la mesure de régime XNmes ;
- un sélecteur 18 configuré pour sélectionner une chaine de régulation parmi la chaîne de régulation nominale 13 et la chaîne de régulation dégradée 16, le sélecteur 18 étant déclenché par la réception d'un signal de panne entraînant la sélection de la chaîne de régulation dégradée 16.

Le signal de panne est généré lors d'une détection de panne, qui peut être effectuée de manière classique par :
- des tests de gamme sur l'acquisition de l'angle de calage pour s'assurer que la valeur mesurée est plausible, ces tests de gamme pouvant être liés aux capteurs (étendue de mesure) ou au moteur (à un point de fonctionnement particulier, on s'attend à avoir l'angle de calage dans une certaine zone) ;
- des tests d'écarts entre voies : les acquisitions sont généralement duplex donc on s'assure que les deux mesures sont cohérentes.

Si les mesures ne sont pas cohérentes, il est considéré qu'une panne est détectée.

Une telle gestion de régulateur 12 permet de continuer à réguler les régimes hélices malgré l'ajout de certaines limitations liées à la suppression de la boucle locale, par exemple lors d'une panne qui rend inopérante la chaîne de régulation nominale 13.

Une telle structure permet notamment d'améliorer la robustesse à une panne de la mesure de l'angle de calage, pour un turbopropulseur à soufflante à calage variable, ou des turboréacteurs à soufflante carénée de type VPF dont les aubes sont à calage variable et éventuellement prévues pour pouvoir fonctionner en mode d'inversion de poussée, ou un turbopropulseur à double hélice non carénée, communément appelé « open-rotor ».

Dans un mode de réalisation préférentiel, le régulateur 12 comprend une étape de retour 19 configurée pour retourner la commande de calage i_{final} :
- à la deuxième étape régulation 15, ce qui permet d'assurer une continuité de la consigne nominale iβ ;
- à la troisième étape de régulation 17, ce qui permet d'assurer la continuité de la consigne dégradée iXN ;
- préférentiellement, la deuxième étape de régulation 15 et la troisième étape de régulation 17, ce qui permet d'assurer la continuité de la consigne nominale iβ, de la consigne dégradée iXN, et de la sortie nominale iβ et dégradée iXN entre elles de sorte que la sortie du régulateur 12 est continue même lorsque le sélecteur 18 passe de la chaîne de régulation nominale 13 à la chaîne de régulation dégradée 16 ou inversement si la panne est réhabilitée.

En effet, la chaîne de régulation non sélectionnée par le sélecteur 18 est, ainsi continuellement mise à jour pour éviter un changement brutal de la valeur de consigne lorsque la chaîne de régulation non sélectionnée sera sélectionnée. Par sélectionné, il est ici entendu que la chaîne de régulation est reliée à la sortie du régulateur 12 par le sélectionneur 18.

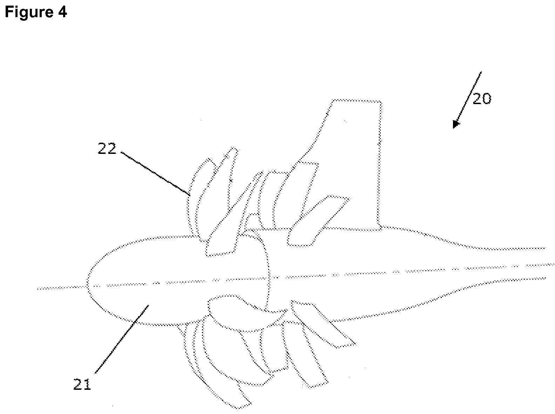

Lorsque le système de régulation de calage 7 est associé à une turbomachine comprenant une hélice à calage variable, telle qu'un « open rotor » 20 représenté en figure 4 comprenant au moins un rotor 21 muni d'une pluralité de pales 22 à calage variable, la mise en oeuvre de l'ensemble peut être réalisée selon deux modes de fonctionnement.

Le générateur de gaz 9, formé par le ou les corps basse pression et/ou haute pression de la turbomachine et comprenant au moins un compresseur et au moins une turbine, entraîne le rotor 21 en rotation et délivre une puissance constante, définie par un pilote ou un procédé de pilotage automatique.

En fonction de la phase de vol envisagée, par exemple une montée, une descente ou un vol de croisière, la vitesse de rotation du rotor 21 peut varier afin d'optimiser le rendement propulsif des pales 22. Il peut donc être décidé de modifier le calage des pales 22 afin de faire varier l'effort exercé par l'air sur les pales 22, modifiant ainsi le couple appliqué au rotor et la vitesse de rotation dudit rotor 21.

En cas de fonctionnement nominal, la chaîne de régulation nominale 13 est sélectionnée.

Le premier capteur 10 (non représenté sur la figure 4) mesure le calage des pales 22 et retourne cette information au régulateur 12. Le deuxième capteur 11 mesure le régime du rotor 21 et retourne l'information au régulateur 12.

En fonction de la poussée nécessaire à la phase de vol, une consigne de régime XNcons est communiquée au régulateur 12.

La première étape de régulation 14 compare la consigne de régime XNcons et la mesure de régime XNmes. En fonction de la différence constatée, une consigne de modification de calage βcons est communiquée par le premier module de régulation 14 à la deuxième étape de régulation 15.

La deuxième étape de régulation 15 compare la consigne de modification de calage βcons et la mesure de calage βmes, et transmet un courant de commande de calage iβ en fonction de la différence constatée.

L'actionneur 8 de modification de calage modifie le calage β des pales 22 en fonction du courant de commande de calage iβ reçu, ce qui a pour effet de modifier le régime XN du rotor 22.

En cas de panne dans la chaîne de régulation nominale 13, par exemple une panne du premier capteur 10, le sélecteur 18 commute sur la chaîne de régulation dégradée 16. La troisième étape de régulation 17 est gérée de manière à se passer de la mesure de calage βmes et régule directement l'actionneur 8 de modification de calage à partir de l'écart entre la consigne de régime XNcons et la mesure de régime XNmes. Le régulateur 12 est donc spécialement conçu pour traiter ce couple d'entrée-sortie et émettre un signal permettant de contrôler la dynamique élevée de l'actionneur 8 de modification de calage.

La chaîne de régulation qui n'est pas sélectionnée reste cohérente de l'état du système grâce au retour 19. Le principe du retour est de reconstituer l'état interne de la chaîne de régulation non sélectionnée de manière à ce que si celle-ci avait été active, elle aurait conduit à avoir la même sortie. C'est pour cette raison que le courant de commande sélectionné i_{final} (celui qui est envoyé à l'actionneur 8) entre dans les deuxième et troisième étapes de régulation. De cette manière lorsqu'il y a commutation d'une chaîne de régulation à l'autre la transition est douce sans variation brutale du signal de commande.

Lors de la désactivation de la chaîne de régulation nominale 13, une butée de calage logicielle, configurée pour limiter le calage minimum accessible, est conséquemment supprimée car elle exploite la mesure de calage de manière à limiter la consigne de calage lorsque la valeur de butée minimale de calage est atteinte.

Cette protection est notamment utile lorsque les consignes de régime hélice sont inadaptées par rapport à la puissance délivrée par le moteur. Le régulateur 12 peut alors demander un calage faible sans qu'aucune protection ne l'en empêche ce qui pourrait amener les hélices dans la zone de décrochage aérodynamique.

Il est donc nécessaire de disposer d'une gestion de puissance adaptée permettant de diminuer au maximum le risque d'avoir des consignes de régime hélice trop importantes par rapport à la puissance délivrée par le moteur.

Des limitations de type minimum-maximum sont donc imposées sur les consignes de régime XNcons en fonction de la puissance du moteur :
- un seuil minimum de consigne de régime protège contre les surcouples, qui sont causés lorsque la puissance délivrée par le moteur ne peut pas être convertie par l'hélice en raison d'un calage trop grand ;
- un seuil maximum de consigne de régime protège contre l'entrée dans la zone de décrochage aérodynamique.

Ces limitations sont liées à la conception des pales et du moteur, et sont des données d'entrée fournies par le concepteur.

La gestion de puissance doit être élaborée pour prendre en compte des limitations supplémentaires liées à la désactivation de la chaîne de régulation nominale 13 lors de l'activation de la chaîne de régulation dégradée 16.

Les limitations dynamiques de l'angle de calage ne peuvent notamment plus être maitrisées par la chaîne de régulation nominale 13, il est donc nécessaire d'effectuer une accommodation des consignes de régime XNcons en abaissant les gradients des consignes.

Les gradients des consignes sont déterminés en fonction des limitations dynamiques de l'angle de calage, qui sont connues et définies pour le fonctionnement nominal, ainsi que les relations entre le régime et le calage qui sont connues lors de la conception. Il est alors possible de déterminer les limitations dynamiques sur les régimes, optionnellement en ajoutant des marges de sécurité.

Plusieurs modes de pilotage sont envisageables dans le traitement de l'accommodation des consignes de régime.

Dans un premier mode de pilotage, le moteur continue de fonctionner normalement avec l'accommodation des consignes de régime. La régulation du régime permet de continuer à faire fonctionner le moteur. Le moteur est opéré normalement et fournit la poussée pendant les régimes stabilisés. Pendant les régimes transitoires, l'accommodation des consignes de régime est adoucie, en limitant les variations, ce qui permet de continuer d'opérer le moteur et évite les pertes de contrôle de poussée. Ceci peut notamment permettre de finir le vol dans des conditions normales, en évitant les pertes de contrôle de poussée, pour effectuer la maintenance une fois au sol. Ce premier mode de pilotage est préféré lorsque les hélices sont pilotables avec un comportement sain, qui implique qu'une variation de calage induit une variation monotone de régime hélice. Cela permet en effet de garder le moteur opérable.

Dans un deuxième mode de pilotage, un retour sécurisé en position de sécurité est effectué grâce à la régulation des consignes de régime. Cela permet de diminuer les risques pour le moteur au prix d'une perte de contrôle de poussée. Ce deuxième mode de pilotage est préférentiellement adopté lorsque les hélices sont pilotables avec un comportement jugé non sain.

Dans un troisième mode de pilotage, utilisé en cas de non pilotabilité des hélices, un courant de commande est imposé directement sur l'actionneur sans passer par une régulation des régimes, de manière à réaliser un retour au ralenti drapeau en boucle ouverte.

## Revendications

1. Procédé de régulation d'un angle de calage des aubes ou pales d'un élément propulseur d'une turbomachine, comprenant la génération d'une commande de calage (i_{final}) en fonction d'une vitesse de rotation de l'hélice (XNₘₑₛ) et d'une consigne de régime (XN_{cons}), et comprenant une chaîne de régulation nominale (13) dans laquelle la commande de calage est générée en fonction également d'une valeur d'un angle de calage (βmes) des aubes ou pales de l'élément propulseur, le procédé étant **caractérisé en ce qu'**il comprend une chaîne de régulation dégradée (16) dans laquelle la commande de calage est générée indépendamment d'une valeur d'un angle de calage des aubes ou pales de l'élément propulseur.

2. Procédé selon la revendication 1, comprenant en outre une étape de sélection de la chaîne de régulation dégradée ou de la chaîne de régulation nominale.

3. Procédé selon l'une des revendications 1 ou 2, comprenant en outre une étape de retour de commande configurée pour retourner la commande de calage à au moins une parmi la chaîne de régulation nominale et la chaine de régulation dégradée.

4. Procédé selon l'une des revendications 1 à 3, dans lequel la chaîne de régulation nominale comprend un premier régulateur configuré pour fournir une consigne de calage en fonction de la consigne de régime et la mesure de régime, et un deuxième régulateur configuré pour fournir la commande dégradée en fonction de la consigne de calage et la mesure de calage.

5. Procédé selon la revendication 4 en combinaison avec la revendication 3, dans lequel la chaîne de retour de commande est configurée pour retourner la commande de calage à au moins un parmi le deuxième régulateur et la chaine de régulation dégradée, et dans lequel le deuxième régulateur est configuré pour fournir la commande dégradée en fonction de la consigne de calage, la mesure de calage et la commande de calage.

6. Procédé selon une des revendications 1 à 5, dans lequel la consigne de régime est fonction d'une puissance délivrée par la turbomachine et est variable entre une limite inférieure et une limite supérieure, la limite inférieure étant configurée pour éviter un surcouple au niveau de l'hélice, la limite supérieure étant configurée pour éviter un décrochage aérodynamique de l'hélice.

7. Procédé selon une des revendications 1 à 6, dans lequel la consigne de régime présente un gradient limité.

8. Dispositif de régulation du calage d'une hélice d'une turbomachine comprenant un actionneur (8) configuré pour modifier un angle de calage de l'hélice, le dispositif de régulation comprenant :
- un régulateur (12),
- un premier capteur (10) configuré pour déterminer une valeur d'un angle de calage de l'hélice,
- un deuxième capteur (11) configuré pour déterminer une vitesse de rotation de l'hélice,
le régulateur (12) étant configuré pour :
- dans un mode de régulation nominal (13), fournir une commande de calage nominale à l'actionneur en fonction d'une consigne de régime, de la valeur de l'angle de calage et de la vitesse de rotation de l'hélice ; le dispositif étant **caractérisé en ce que** le régulateur est configuré pour :
- dans un mode de régulation dégradé (16), fournir une commande de calage dégradée à l'actionneur en fonction de la consigne de régime et de la vitesse de rotation de l'hélice, indépendamment de la valeur de l'angle de calage ;
le dispositif de régulation comprenant en outre un sélecteur (18) configuré pour sélectionner le mode de régulation nominale (13) ou le mode de régulation dégradé (17) du régulateur (12).

9. Turbomachine comprenant une hélice à calage variable et un dispositif de régulation de calage selon la revendication 8, dans lequel le régulateur (12) met en oeuvre un procédé de régulation de calage selon l'une des revendications 1 à 7.

10. Aéronef comprenant une turbomachine selon la revendication 9.

## Patentansprüche

1. Verfahren zur Regelung eines Verstellwinkels der Schaufeln oder Blätter eines Antriebselements einer Turbomaschine, umfassend das Erzeugen eines Verstellbefehls (i_{final}) in Abhängigkeit von einer Rotationsgeschwindigkeit der Schraube (XNₘₑₛ) und eines Drehzahlsollwerts (XN_{cons}), und umfassend eine nominale Regelungskette (13), in welcher der Verstellbefehl in Abhängigkeit ebenfalls von einem Wert eines Verstellwinkels (βmes) der Schaufeln oder Blätter des Antriebselements erzeugt wird, wobei das Verfahren **dadurch gekennzeichnet ist, dass** es eine eingeschränkte Regelungskette (16) umfasst, in welcher der Verstellbefehl unabhängig von einem Wert eines Verstellwinkels der Schaufeln oder Blätter des Antriebselements erzeugt wird.

2. Verfahren nach Anspruch 1, umfassend ferner einen Auswahlschritt der eingeschränkten Regelungskette oder der nominalen Regelungskette.

3. Verfahren nach einem der Ansprüche 1 oder 2, umfassend ferner einen Befehlsrückgabeschritt, der dazu ausgelegt ist, den Verstellbefehl an mindestens eine von der nominalen Regelungskette und der eingeschränkten Regelungskette zurückzugeben.

4. Verfahren nach einem der Ansprüche 1 bis 3, wobei die nominale Regelungskette einen ersten Regler umfasst, der dazu ausgelegt ist, einen Verstellsollwert in Abhängigkeit vom Drehzahlsollwert und von der Drehzahlmessung bereitzustellen, und einen zweiten Regler, der dazu ausgelegt ist, einen eingeschränkten Befehl in Abhängigkeit vom Verstellsollwert und von der Verstellmessung bereitzustellen.

5. Verfahren nach Anspruch 4 in Kombination mit Anspruch 3, wobei die Befehlsrückgabekette dazu ausgelegt ist, den Verstellbefehl an mindestens einen von dem zweiten Regler und der eingeschränkte Regelungskette zurückzugeben, und wobei der zweite Regler dazu ausgelegt ist, den eingeschränkten Befehl in Abhängigkeit vom Verstellsollwert, von der Verstellmessung und vom Verstellbefehl bereitzustellen.

6. Verfahren nach einem der Ansprüche 1 bis 5, wobei der Drehzahlsollwert von einer von der Turbomaschine bereitgestellten Leistung abhängt und zwischen einer unteren Grenze und einer oberen Grenze variabel ist, wobei die untere Grenze dazu ausgelegt ist, ein Überdrehmoment im Bereich der Schraube zu vermeiden, wobei die obere Grenze dazu ausgelegt ist, einen aerodynamischen Strömungsabriss der Schraube zu vermeiden.

7. Verfahren nach einem der Ansprüche 1 bis 6, wobei der Drehzahlsollwert einen begrenzen Gradienten aufweist.

8. Vorrichtung zur Regelung der Verstellung einer Schraube einer Turbomaschine, umfassend einen Aktuator (8), der dazu ausgelegt ist, einen Verstellwinkel der Schraube zu ändern, wobei die Regelungsvorrichtung umfasst:
- einen Regler (12),
- einen ersten Sensor (10), der dazu ausgelegt ist, einen Wert eines Verstellwinkels der Schraube zu bestimmen,
- einen zweiten Sensor (11), der dazu ausgelegt ist, eine Rotationsgeschwindigkeit der Schraube zu bestimmen,
wobei der Regler (12) dazu ausgelegt ist:
- in einem nominalen Regelungsmodus (13) dem Aktuator einen nominalen Verstellbefehl in Abhängigkeit von einem Drehzahlsollwert, vom Wert des Verstellwinkels und von der Rotationsgeschwindigkeit der Schraube bereitzustellen;
wobei die Vorrichtung **dadurch gekennzeichnet ist, dass** der Regler dazu ausgelegt ist:
- in einem eingeschränkten Regelungsmodus (16) dem Aktuator einen eingeschränkten Verstellbefehl in Abhängigkeit vom Drehzahlsollwert und von der Rotationsgeschwindigkeit der Schraube unabhängig vom Wert des Verstellwinkels bereitzustellen;
wobei die Regelungsvorrichtung ferner einen Wahlschalter (18) umfasst, der dazu ausgelegt ist, den nominalen Regelungsmodus (13) oder den eingeschränkten Regelungsmodus (17) des Reglers (12) auszuwählen.

9. Turbomaschine, umfassend eine Schraube mit variabler Verstellung und eine Vorrichtung zur Regelung der Verstellung nach Anspruch 8, wobei der Regler (12) ein Verfahren zur Regelung der Verstellung nach einem der Ansprüche 1 bis 7 durchführt.

10. Luftfahrzeug, umfassend eine Turbomaschine nach Anspruch 9.

## Claims

1. A method of regulating a pitch angle of the blades of a propulsion element of a turbomachine, comprising the generation of a pitch command (i_{final}) as a function of a propeller rotation speed (XNₘₑₛ) and a speed setpoint (XN_{cons}), and comprising a nominal control chain (13) in which the pitch command is generated also as a function of a value of a pitch angle (βmes) of the blades of the propulsion element, the method being **characterized in that** it comprises a degraded control chain (16) in which the pitchcommand is generated independently of a value of a pitch pitchangle of the blades of the propulsion element.

2. Method according to claim 1, further comprising a step of selecting the degraded control chain or the nominal control chain.

3. A method according to one of claims 1 or 2, further comprising a command feedback step configured to feedback the pitch command to at least one of the nominal control chain and the degraded control chain.

4. A method according to any of claims 1 to 3, wherein the nominal control chain comprises a first controller configured to provide a pitch setpoint as a function of the speed setpoint and the speed measurement, and a second controller configured to provide the degraded command as a function of the pitch command and the pitch measurement.

5. The method of claim 4 in combination with claim 3, wherein the command feedback chain is configured to return the pitch command to at least one of the second controller and the degraded control chain, and wherein the second controller is configured to provide the degraded command as a function of the pitch setpoint, the pitch measurement and the pitch command.

6. A method according to one of claims 1 to 5, in which the speed setpoint is a function of a power output of the turbomachine and is variable between a lower limit and an upper limit, the lower limit being configured to avoid overtorque at the propeller, the upper limit being configured to avoid aerodynamic stall of the propeller.

7. Method according to one of claims 1 to 6, wherein the speed setpoint has a limited gradient.

8. A device for regulating the pitch of a propeller of a turbomachine comprising an actuator (8) configured to modify a pitch angle of the propeller, the regulating device comprising:
- a regulator (12),
- a first sensor (10) configured to determine a value of a propeller pitch angle,
- a second sensor (11) configured to determine a propeller rotation speed,
the regulator (12) being configured to :
- in a nominal control mode (13), supply a nominal pitch command to the actuator as a function of a speed setpoint, the value of the pitch angle and the speed of rotation of the propeller; the device being **characterized in that** the controller is configured to :
- in a degraded control mode (16), supply a degraded pitch command to the actuator as a function of the speed setpoint and the speed of rotation of the propeller, independently of the value of the pitch angle;
the control device further comprising a selector (18) configured to select the nominal control mode (13) or the degraded control mode (17) of the controller (12).

9. A turbomachine comprising a variable-pitch propeller and a pitch control device according to claim 8, wherein the controller (12) implements a method of regulating a pitch angle according to one of claims 1 to 7.

10. Aircraft comprising a turbomachine according to claim 9.
